# EUROPEAN PATENT SPECIFICATION

(11) **EP 1 811 862 B1**
(45) Date of publication and mention of the grant of the patent: **17.04.2013**
(21) Application number: 05804331.6
(22) Date of filing: 30.09.2005
(51) Int. Cl.: A23L 1/236, A23L 1/22

(54) **METHOD OF PREPARATION OF ENCAPSULATED COMPOSITIONS**
HERSTELLUNGSVERFAHREN FÜR VERKAPSELTE ZUSAMMENSETZUNGEN
PROCEDE DE PREPARATION DE COMPOSITIONS ENCAPSULEES

(30) Priority: 30.09.2004 US 955225
(43) Date of publication of application: 01.08.2007
(73) Proprietor: Kraft Foods Global Brands LLC, Northfield, IL 60093 (US)
(72) Inventor: BOGHANI, Navroz, Flanders, NJ 07836 (US); GEBRESELASSIE, Petros, Highland Park, NJ 08904 (US)
(74) Representative: Wilson Gunn
(86) International application number: PCT/US2005/035485
(87) International publication number: WO 2006/039651

(56) References cited:
- WO-A-98/03076
- US-A- 4 751 095
- US-A- 4 918 182
- US-A- 4 929 447
- US-A- 4 933 190
- US-A- 4 971 797
- US-A1- 2002 044 968
- PATENT ABSTRACTS OF JAPAN vol. 013, no. 510 (C-654), 15 November 1989 (1989-11-15) & JP 01 206969 A (TAKEDA CHEM IND LTD), 21 August 1989 (1989-08-21)

## Description

Included are compositions comprising an aqueous solution comprising sucralose and cyclodextrin in the temperature range from about 40°C to about 80°C. These compositions are used to make co-crystallized/precipitated sucralose-cyclodextrin complexes. Methods of preparing the complex and encapsulated compositions comprising the complex are also provided.

### BACKGROUND

Encapsulated intense sweeteners have a particular advantage when included in gum compositions such as chewing gum and bubble gum compositions. The encapsulated sweeteners are not immediately released as sugar would be when included in a chewing gum. By contrast, an encapsulated sweetener composition provides extended sweetening on chewing because the sweetener is not released until the encapsulating material has been subjected to mastication.

Intense sweeteners such as aspartame (APM) and acesulfame potassium (Ace-K) have been used in encapsulated compositions in combination with high molecular weight polymers which allow for their slow release upon chewing in a gum composition.

Sucralose is another popular intense sweetener which is derived from sucrose in which one or more hydroxyl groups are replaced by chlorine atoms. This compound is described in U.K. Patent No. 1,543,167, the disclosure of which is incorporated herein by reference. Sucralose may be referred to by different chemical names including: 4-chloro-4-deoxy-α-D-galactopyranosyl, 1,6-dichloro 1,6-dideoxy-β-D-fructofuratioside, and 4,1',6',-trichloro-4,1',6'-trideoxygalactusucrose.

Sucralose is relatively stable and inert. This includes exhibiting stability in acid aqueous solutions, in marked contrast to peptide-based sweeteners such as aspartame. Under completely dry conditions, however, sucralose which is present in a crystalline form tends to discolor in response to elevated temperatures. For example, such discoloration can be exhibited after twenty minutes of exposure of pure dry sucralose to a temperature of 100°C., wherein the color changes to a pale brown. This degradation of sucralose results in a commercially unacceptable product. This high temperature instability of sucralose has made it commercially impractical to prepare an encapsulated sucralose with the extrusion techniques used to prepare the encapsulated APM and Ace-K compositions.

The heat stability issues of sucralose were addressed in U.S. Patent No. 4,971,797 to Cherukuri, et al. Cherukuri provides a method of preparing a co-crystallized / precipitated complex of cyclodextrin and sucralose which reduces the degradation of the sucralose when the complex is exposed to heat. However, the method of Cherukuri requires the use of an organic solvent such as methanol in the co-crystallization in order to allow the method to be conducted at room temperature. Therefore, the co-crystallized / precipitated complex must then be subjected to an additional process step to ensure removal of the methanol, a highly toxic material. Proper handling and disposal of methanol is also required in such a process and is undesirable in view of environmental concerns.

Since sucralose is a desirable sweetener, and is preferred for compositions where APM stability is questionable, there is a need for an encapsulated sucralose composition which may be used in a variety of compositions including gum compositions. The encapsulated sweetener composition should be prepared by a process which avoids heat degradation of the sucralose.

US-A-4,971,797 discloses the preparation of chlorosucrose sweeteners and particularly the preparation of such sweeteners in a stable form useful for incorporation in a variety of food and confectionery products as well as for medicinal uses. Non aqueous solvents such as methanol can be used.

US 2002/004968A discloses a continuous process for producing controlled release, discrete, solid particles which contain an encapsulated and/or embedded component such as a heat sensitive or readily oxidisable pharmaceutically, biologically, or nutritionally active component.

WO98/03076A, discloses the coating of sensitive active ingredients of chewing gum, such as aspartame, with polyvinyl acetate and then with a second coating of zein.

Some embodiments provide a method of preparing a co-crystallized / precipitated complex which includes the steps of:
(a) preparing a solution of sucralose and cyclodextrin in water;
(b) maintaining the solution under heat for a period of time sufficient to allow formation of a sucralose/cyclodextrin complex;
(c) drying the solution to permit harvesting of the co-crystallized / precipitated sucralose/cyclodextrin complex; and
(d) forming the co-crystallized / precipitated complex to a suitable particle size.

In some embodiments there is provided a method of preparing an encapsulated sweetener which includes the steps of:
(a) preparing a solution of sucralose and cyclodextrin in water;
(b) maintaining the solution under heat for a time sufficient to allow co-crystallization of the sucralose and the cyclodextrin to form a co-crystallized / precipitated complex;
(c) drying the co-crystallized / precipitated complex;
(d) forming the co-crystallized / precipitated complex into a suitable particle size;
(e) combining the co-crystallized / precipitated complex with an encapsulating polymer;
(f) melt extruding the co-crystallized / precipitated complex with the polymer to provide an encapsulated sweetener composition; and
(g) forming the encapsulated sweetener composition into a suitable particle size.

Some embodiments provide a method of preparing a gum composition including the step of combining a gum base and a sweetener composition. The sweetener composition is provided by:
(a) preparing a solution of an amount of sucralose and an amount of cyclodextrin in water;
(b) heating the solution;
(c) maintaining the solution for a period of time sufficient to allow co-crystallization of the sucralose and the cyclodextrin to form a co-crystallized / precipitated complex;
(d) drying the co-crystallized / precipitated complex;
(e) grinding the co-crystallized / precipitated complex to a suitable particle size;
(f) combining the co-crystallized / precipitated complex with polyvinyl acetate;
(g) melting and extruding the co-crystallized / precipitated complex with polyvinyl acetate providing an encapsulated composition;
(h) cooling the encapsulated composition; and
(i) grinding the encapsulated composition to a suitable particle size.

### DETAILED DESCRIPTION

As used herein the transitional term "comprising (also "comprises," etc.) which is synonymous with "including," "containing," or "characterized by," is inclusive or open-ended and does not exclude additional, unrecited elements or method steps, regardless of its use in the preamble or the body of a claim.

As used herein, the terms "bubble gum" and "chewing gum" are used interchangeably and are both meant to include any gum compositions.

As used herein, the term "active" refers to any composition which may be included in the encapsulated compositions of some embodiments, wherein the active provides some desirable property upon release-from encapsulation. Examples of suitable actives include sweeteners, such as sucralose, flavors, medicaments, vitamins, and combinations thereof.

The encapsulated sweetener of some embodiments includes a co-crystallized / precipitated complex of sucralose and cyclodextrin in combination with an encapsulating polymer. Since the resulting co-crystallized / precipitated complex is resistant to heat degradation compared with free sucralose, the co-crystallized / precipitated complex may be combined with the polymer by melt extrusion. This provides an encapsulate co-crystallized / precipitated sucralose which is suitable for use in a variety or confectionary products including gum compositions.

The co-crystallized / precipitated complex including sucralose and cyclodextrin may also include other sweeteners which are well-known in the art. These sweeteners may be selected from a wide range of materials including water-soluble sweeteners, water-soluble artificial sweeteners, water-soluble sweeteners derived from naturally occurring water-soluble sweeteners, dipeptide based sweeteners, and protein based sweeteners, including mixtures thereof. Without being limited to particular sweeteners, representative categories and examples include:
(a) water-soluble sweetening agents such as dihydrochalcones, monellin, steviosides, glycyrrhizin, dihydroflavenol, and sugar alcohols such as sorbitol, mannitol, maltitol, and L-aminodicarboxylic acid aminoalkenoic acid ester amides, such as those disclosed in U.S. Pat. No. 4,619,834, which disclosure is incorporated herein by reference, and mixtures thereof;
(b) water-soluble artificial sweeteners such as soluble saccharin salts, i.e., sodium or calcium saccharin salts, cyclamate salts, the sodium, ammonium or calcium salt of 3,4-dihydro-6-methyl-1,2,3-oxathiazine-4-one-2,2-dioxide, the potassium salt of 3,4-dihydro-6-methyl-1,2,3-oxathiazine-4-one-2,2-dioxide (Acesulfame-K), the free acid form of saccharin, and mixtures thereof;
(c) dipeptide based sweeteners, such as L-aspartic acid derived sweeteners, such as L-aspartyl-L-phenylalanine methyl ester (Aspartame) and materials described in U.S. Pat. No. 3,492,131, L-alphaaspartyl-N-(2,2,4,4-tetramethyl-3-thietanyl)-D-alaninamide hydrate (Alitame), methyl esters of L-aspartyl-L-phenylglycerine and L-aspartyl-L-2,5-dihydrophenyl-glycine, L-aspartyl-2,5-dihydro-L-phenylalanine; L-aspartyl-L-(1-cyclohexen)-alanine, Neotame and mixtures thereof;
(d) water-soluble sweeteners derived from naturally occurring water-soluble sweeteners, such as chlorinated derivatives of ordinary sugar (sucrose), e.g., chlorodeoxysugar derivatives such as derivatives of chlorodeoxysucrose or chlorodeoxygalactosucrose, known, for example, under the product designation of Sucralose; examples of chlorodeoxysucrose and chlorodeoxygalactosucrose derivatives include but are not limited to: 1-chloro-1'-deoxysucrose; 4-chloro-4-deoxy-alpha-D-galactopyranosyl-alpha-D-fructofuranoside, or 4-chloro-4-deoxygalactosucrose; 4-chloro-4-deoxy-alpha-D-galactopyranosyl-1-chloro-1-deoxy-beta-D-fructo-furanoside, or 4,1'-dichloro-4,1'-dideoxygalactosucrose; 1',6'-dichloro1',6'-dideoxysucrose; 4-chloro-4-deoxy-alpha-D-galactopyranosyl-1,6-dichloro-1,6-dideoxy-beta-D- fructofuranoside, or 4,1',6'-trichloro-4,1',6'-trideoxygalactosucrose; 4,6-dichloro-4,6-dideoxy-alpha-D-galactopyranosyl-6-chloro-6-deoxy-beta-D- fructofuranoside, or 4,6,6'-trichloro-4,6,6'-trideoxygalactosucrose; 6,1',6'-trichloro-6,1',6'-trideoxysucrose; 4,6-dichloro-4,6-dideoxy-alpha-D-galacto-pyranosyl-1,6-dichloro-1,6-dideox y-beta-D-fructofuranoside, or 4,6,1_{,}6'-tetrachloro4,6,1',6'-dichloro-1,6-dideox y-beta-D-buctofuranoside, or 4,6,1',6'-tetrachloro4,6,1',6'-tetradeoxygalacto-sucrose; and 4,6,1',6'-tetradeoxy-sucrose, and mixtures thereof; and
(e) protein based sweeteners such as thaumaoccous danielli (Thaumatin I and II).

The intense sweetening agents may be used in many distinct physical forms well-known in the art to provide an initial burst of sweetness and/or a prolonged sensation of sweetness. Without being limited thereto, such physical forms include free forms, such as spray dried, powdered, beaded forms, encapsulated forms, and mixtures thereof

Desirably, the additional sweetener is a high intensity sweetener as is sucralose which includes aspartame and acesulfame potassium (Ace-K).

The co-crystallized / precipitated complex may primarily include sucralose with cyclodextrin. Within the co-crystallized / precipitated complex, the cyclodextrin may be present in an amount greater than zero up to about 25% by weight of the complex, more specifically up to about 15% or up to about 5%. The cyclodextrin may be any of α-cyclodextrin, β-cyclodextrin, γ-cyclodextrin, and combinations thereof.

The co-crystallized / precipitated complex of sucralose and cyclodextrin may be prepared by first preparing a solution in water or a combination of water with another suitable organic solvent. The solution is then heated to a temperature in the range from about 40 °C to about 80 °C for about 10 minutes to about 20 minutes. The heating of the solution has been found not to result in an appreciable degradation of the sucralose, as measured by changes in color, i.e., discoloration as measured by spectrophotometry, as described below.

After the sucralose/cyclodextrin solution has been maintained under heat for a sufficient time to form the co-crystallized / precipitated complex of sucralose and cyclodextrin, the co-crystallized / precipitated complex is then obtained upon drying or otherwise removing the solvent. If necessary, the particles obtained after drying may be formed to a desired size. This may be accomplished by any mechanical means such as milling, grinding, etc. In some embodiments the co-crystallized / precipitated complex has an average particle size ranging from about 1 µm to about 150 µm.

The co-crystallized / precipitated complex may be encapsulated in a polymer. Examples of suitable polymers include polyethylene, crosslinked polyvinyl pyrrolidone, polymethylmethacrylate, polylacticacid, polyhydroxyalkanoates, ethylcellulose, polyvinyl acetate phthalate, polyethyleneglycol esters, methacrylicacid-co-methylmethacrylate, acrylic polymers and copolymers, carboxyvinyl polymer, polyamides, polystyrene, polyvinyl acetate and combinations thereof. More specifically, the polymer will include polyvinyl acetate either alone or in combination with another polymer. The polymer may have a molecular weight from about 15,000 to about 500,000.

The co-crystallized / precipitated complex of sucralose and cyclodextrin may be combined with the encapsulating polymer by melt extrusion. This is conducted by melting a combination of one or more polymers in combination with the co-crystallized / precipitated complex in the temperature range of about 65 °C to about 140 °C. Another sweetener, such as a high-intensity sweetener as described above may be added prior to melting the combination. The extrudate is then cooled and formed into particles of a desired size. This may be accomplished through cutting, grinding, pulverizing, milling or any other appropriate technique as known in the art. The extrudate particles may have an average particle size ranging from about 50 µm to about 800 µm.

The encapsulated sweetener composition may include any desired combination of polymer and the co-crystallized / precipitated complex, in addition to an optionally added sweetener. The co-crystallized / precipitated complex may be present in an amount from about 5% to about 50% by weight of the encapsulated sweetener composition.

The encapsulated sweetener compositions as described herein may also be used in a gum composition, including but not limited to chewing gums and bubble gums. Encapsulation of the sweetener provides advantages in the preparation of gum compositions by providing an enhanced or prolonged sweetening perception to a person who is chewing the gum. This perception results from the manner in which the sweetener is released over time as a result of the gum being chewed.

The sweetener composition may be used in any amount suitable for the desired sweetening effect to be achieved. In general, an effective amount of sweetener may be utilized to provide the level of sweetness desired, and this amount may vary especially when a sweetener is selected in addition to the encapsulated sweetener or wherein a sweetener is added in addition to the encapsulated sweetener. The amount of sweetener may be present in amounts from about 0.001% to about 3%, by weight of the gum composition, depending upon the sweetener or combination of sweeteners used. The exact range of amounts for each type of sweetener may be selected by those skilled in the art.

The gum composition may include a gum base. The gum base may include any component known in the chewing gum art. For example, the gum composition may include elastomers, bulking agents, waxes, elastomer solvents, emulsifiers, plasticizers, fillers and mixtures thereof.

The elastomers (rubbers) employed in the gum base will vary greatly depending upon various factors such as the type of gum base desired, the consistency of gum composition desired and the other components used in the composition to make the final chewing gum product. The elastomer may be any water-insoluble polymer known in the art, and includes those gum polymers utilized for chewing gums and bubble gums. Illustrative examples of suitable polymers in gum bases include both natural and synthetic elastomers. For example, those polymers which are suitable in gum base compositions include, without limitation, natural substances (of vegetable origin) such as chicle, natural rubber, crown gum, nispero, rosidinha, jelutong, perillo, niger gutta, tunu, balata, guttapercha, lechi capsi, sorva, gutta kay, and the like, and combinations thereof. Examples of synthetic elastomers include, without limitation, styrene-butadiene copolymers (SBR), polyisobutylene, isobutylene-isoprene copolymers, polyethylene, polyvinyl acetate and the like, and combinations thereof.

Additional useful polymers include: crosslinked polyvinyl pyrrolidone, polymethylmethacrylate copolymers of lactic acid, polyhydroxyalkanoates, plasticized ethylcellulose, polyvinyl acetatephthalate and combinations thereof.

The amount of elastomer employed in the gum base may vary depending upon various factors such as the type of gum base used, the consistency of the gum composition desired and the other components used in the composition to make the final chewing gum product. In general, the elastomer will be present in the gum base in an amount from about 10% to about 60% by weight of the gum region, desirably from about 35% to about 40% by weight.

In some embodiments, the gum base may include wax. It softens the polymeric elastomer mixture and improves the elasticity of the gum base. When present, the waxes employed will have a melting point below about 60°C., and preferably between about 45°C. and about 55°C. The low melting wax may be a paraffin wax. The wax may be present in the gum base in an amount from about 6% to about 10%, and preferably from about 7% to about 9.5%, by weight of the gum base.

In addition to the low melting point waxes, waxes having a higher melting point may be used in the gum base in amounts up to about 5%, by weight of the gum base. Such high melting waxes include beeswax, vegetable wax, candelilla wax, camuba wax, most petroleum waxes, and the like, and mixtures thereof.

In addition to the components set out above, the gum base may include a variety of other ingredients, such as components selected from elastomer solvents, emulsifiers, plasticizers, fillers, and mixtures thereof.

The gum base may contain elastomer solvents to aid in softening the elastomer component. Such elastomer solvents may include those elastomer solvents known in the art, for example, terpinene resins such as polymers of alpha-pinene or beta-pinene, methyl, glycerol and pentaerythritol esters of rosins and modified rosins and gums such as hydrogenated, dimerized and polymerized rosins, and mixtures thereof. Examples of elastomer solvents suitable for use herein may include the pentaerythritol ester of partially hydrogenated wood and gum rosin, the pentaerythritol ester of wood and gum rosin, the glycerol ester of wood rosin, the glycerol ester of partially dimerized wood and gum rosin, the glycerol ester of polymerized wood and gum rosin, the glycerol ester of tall oil rosin, the glycerol ester of wood and gum rosin and the partially hydrogenated wood and gum rosin and the partially hydrogenated methyl ester of wood and rosin, and the like, and mixtures thereof. The elastomer solvent may be employed in the gum base in amounts from about 2% to about 15%, and preferably from about 7% to about 11%, by weight of the gum base.

The gum base may also include emulsifiers which aid in dispersing the immiscible components into a single stable system, The emulsifiers useful in this invention include glyceryl monostearate, lecithin, fatty acid monoglycerides, diglycerides, propylene glycol monostearate, and the like, and mixtures thereof. The emulsifier may be employed in amounts from about 2% to about 15%, and more specifically, from about 7% to about 11 %, by weight of the gum base.

The gum base may also include plasticizers or softeners to provide a variety of desirable textures and consistency properties. Because of the low molecular weight of these ingredients, the plasticizers and softeners are able to penetrate the fundamental structure of the gum base making it plastic and less viscous. Useful plasticizers and softeners include lanolin, palmitic acid, oleic acid, stearic acid, sodium stearate, potassium stearate, glyceryl triacetate, glyceryl lecithin, glyceryl monostearate, propylene glycol monostearate, acetylated monoglyceride, glycerine, and the like, and mixtures thereof. Waxes, for example, natural and synthetic waxes, hydrogenated vegetable oils, petroleum waxes such as polyurethane waxes, polyethylene waxes, paraffin waxes, microcrystalline waxes, fatty waxes, sorbitan monostearate, tallow, propylene glycol, mixtures thereof, and the like, may also be incorporated into the gum base. The plasticizers and softeners are generally employed in the gum base in amounts up to about 20% by weight of the gum base, and more specifically in amounts from about 9% to about 17%, by weight of the gum base.

Plasticizers also include the hydrogenated vegetable oils and include soybean oil and cottonseed oil which may be employed alone or in combination. These plasticizers provide the gum base with good texture and soft chew characteristics. These plasticizers and softeners are generally employed in amounts from about 5% to about 1,4%, and more specifically in amounts from about 5% to about 13.5%, by weight of the gum base.

Anhydrous glycerin may also be employed as a softening agent, such as the commercially available United States Pharmacopeia (USP) grade. Glycerin is a syrupy liquid with a sweet warm taste and has a sweetness of about 60% of that of cane sugar. Because glycerin is hygroscopic, the anhydrous glycerin may be maintained under anhydrous conditions throughout the preparation of the chewing gum composition.

In some embodiments, the gum base of this invention may also include effective amounts of bulking agents such as mineral adjuvants which may serve as fillers and textural agents. Useful mineral adjuvants include calcium carbonate, magnesium carbonate, alumina, aluminum hydroxide, aluminum silicate, talc, tricalcium phosphate, dicalcium phosphate, calcium sulfate and the like, and mixtures thereof. These fillers or adjuvants may be used in the gum base compositions in various amounts, The amount of filler may be present in an amount from about zero to about 40%, and more specifically from about zero to about 30%, by weight of the gum base.

A variety of traditional ingredients may be optionally included in the gum base in effective amounts such as coloring agents, antioxidants, preservatives, flavoring agents, and the like. For example, titanium dioxide and other dyes suitable for food, drug and cosmetic applications, known as F. D. & C. dyes, may be utilized. An anti-oxidant such as butylated hydroxytoluene (BHT), butylated hydroxyanisole (BHA), propyl gallate, and mixtures thereof, may also be included. Other conventional chewing gum additives known to one having ordinary skill in the chewing gum art may also be used in the gum base.

The gum composition may include amounts of conventional additives selected from the group consisting of sweetening agents (sweeteners), plasticizers, softeners, emulsifiers, waxes, fillers, bulking agents (carriers, extenders, bulk sweeteners), mineral adjuvants, flavoring agents (flavors, flavorings), coloring agents (colorants, colorings), antioxidants, acidulants, thickeners, medicaments, and the like, and mixtures thereof. Some of these additives may serve more than one purpose. For example, in sugarless gum compositions, a sweetener, such as maltitol or other sugar alcohol, may also function as a bulking agent.

The plasticizers, softening agents, mineral adjuvants, waxes and antioxidants discussed above, as being suitable for use in the gum base, may also be used in the chewing gum composition. Examples of other conventional additives which may be used include emulsifiers, such as lecithin and glyceryl monostearate, thickeners, used alone or in combination with other softeners, such as methyl cellulose, alginates, carrageenan, xanthan gum, gelatin, carob, tragacanth, locust bean gum, pectin, alginates, galactomannans such as guar gum, carob bean gum, glucomannan, gelatin, starch, starch derivatives, dextrins and cellulose derivatives such as carboxy methyl cellulose, acidulants such as malic acid, adipic acid, citric acid, tartaric acid, fumaric acid, and mixtures thereof, and fillers, such as those discussed above under the category of mineral adjuvants.

In some embodiments, the gum region may also contain a bulking agent. Suitable bulking agents may be water-soluble and include sweetening agents selected from, but not limited to, monosaccharides, disaccharides, polysaccharides, sugar alcohols, and mixtures thereof; randomly bonded glucose polymers such as those polymers distributed under the trade name POLYDEXTROSE by Pfizer, Inc., Groton, Conn.; isomalt (a racemic mixture of alpha-D-glucopyranosyl-1,6-mmnitol and alpha-D-glucopyranosyl-1,6-sorbitol manufactured under the trade name PALATINIT by Suddeutsche Zucker), maltodextrins; hydrogenated starch hydrolysates; hydrogenated hexoses; hydrogenated disaccharides; minerals, such as calcium carbonate, talc, titanium dioxide, dicalcium phosphate; celluloses; and mixtures thereof.

Suitable sugar bulking agents include monosaccharides, disaccharides and polysaccharides such as xylose, ribulose, glucose (dextrose), mannose, galactose, fructose (levulose), sucrose (sugar), maltose, invert sugar, partially hydrolyzed starch and corn syrup solids, and mixtures thereof.

Suitable sugar alcohol bulking agents include sorbitol, xylitol, mannitol, galactitol, maltitol, and mixtures thereof.

Suitable hydrogenated starch hydrolysates include those disclosed in U.S. Pat. Nos. 25,959,3,356,811,4,279,931 and various hydrogenated glucose syrups and/or powders which contain sorbitol, hydrogenated disaccharides, hydrogenated higher polysaccharides, or mixtures thereof. Hydrogenated starch hydrolysates are primarily prepared by the controlled catalytic hydrogenation of corn syrups. The resulting hydrogenated starch hydrolysates are mixtures of monomeric, dimeric, and polymeric saccharides. The ratios of these different saccharides give different hydrogenated starch hydrolysates different properties. Mixtures of hydrogenated starch hydrolysates, such as LYCASIN, a commercially available product manufactured by Roquette Freres of France, and HYSTAR, a commercially available product manufactured by Lonza, Inc., of Fairlawn, N.J., are also useful.

Any sweetening agent, as described above, may also be added as an additional, optional, and independent component to the gum compositions.

The flavoring agents which may be used include those flavors known to the skilled artisan, such as natural and artificial flavors. These flavorings may be chosen from synthetic flavor oils and flavoring aromatics and/or oils, oleoresins and extracts derived from plants, leaves, flowers, fruits, and so forth, and combinations thereof. Nonlimiting representative flavor oils include spearmint oil, cinnamon oil, oil of wintergreen (methyl salicylate), peppermint oil, clove oil, bay oil, anise oil, eucalyptus oil, thyme oil, cedar leaf oil, oil of nutmeg, allspice, oil of sage, mace, oil of bitter almonds, and cassia oil. Also useful flavorings are artificial, natural and synthetic fruit flavors such as vanilla, and citrus oils including lemon, orange, lime, grapefruit, and fruit essences including apple, pear, peach, grape, strawberry, raspberry, cherry, plum, pineapple, apricot and so forth. These flavoring agents may be used in liquid or solid form and may be used individually or in admixture. Commonly used flavors include mints such as peppermint, menthol, spearmint, artificial vanilla, cinnamon derivatives, and various fruit flavors, whether employed individually or in admixture. Flavors may also provide breath-freshening properties, particularly the mint flavors when used in combination with the cooling agents, described herein below.

Other useful flavorings include aldehydes and esters such as cinnamyl acetate, cinnamaldehyde, citral diethylacetal, dihydrocarvyl acetate, eugenyl formate, p-methylamisol, and so forth. Generally any flavoring or food additive such as those described in Chemicals Used in Food Processing, publication 1274, pages 63-258, by the National Academy of Sciences, may be used. This publication is incorporated herein by reference. This may include natural as well as synthetic flavors.

Further examples of aldehyde flavorings include but are not limited to acetaldehyde (apple), benzaldehyde (cherry, almond), anisic aldehyde (licorice, anise), cinnamic aldehyde (cinnamon), citral, i.e., alpha-citral (lemon, lime), neral, i.e., beta-citral (lemon, lime), decanal (orange, lemon), ethyl vanillin (vanilla, cream), heliotrope, i.e., piperonal (vanilla, cream), vanillin (vanilla, cream), alpha-amyl cinnamaldehyde (spicy fruity flavors), butyraldehyde (butter, cheese), valeraldehyde (butter, cheese), citronellal (modifies, many types), decanal (citrus fruits), aldehyde C-8 (citrus fruits), aldehyde C-9 (citrus fruits), aldehyde C-12 (citrus fruits), 2-ethyl butyraldehyde (berry fruits), hexenal, i.e., trans-2 (berry fruits), tolyl aldehyde (cherry, almond), veratraldehyde (vanilla), 2,6-dimethyl-5-heptenal, i.e., melonal (melon), 2,6-dimethyloctanal (green fruit), and 2-dodecenal (citrus, mandarin), cherry, grape, strawberry shortcake, and mixtures thereof.

In some embodiments, the flavoring agent may be employed in either liquid form and/or dried form. When employed in the latter form, suitable drying means such as spray drying the oil may be used. Alternatively, the flavoring agent may be absorbed onto water soluble materials, such as cellulose, starch, sugar, maltodextrin, gum arabic and so forth or may be encapsulated. The actual techniques for preparing such dried forms are vvell-known.

In some embodiments, the flavoring agents may be used in many distinct physical forms well-known in the art to provide an initial burst of flavor and/or a prolonged sensation of flavor. Without being limited thereto, such physical forms include free forms, such as spray dried, powdered, beaded forms, encapsulated forms, and mixtures thereof.

The amount of flavoring agent employed herein may be a matter of preference subject to such factors as the type of final chewing gum composition, the individual flavor, the gum base employed, and the strength of flavor desired. Thus, the amount of flavoring may be varied in order to obtain the result desired in the final product and such variations are within the capabilities of those skilled in the art without the need for undue experimentation. In gum compositions, the flavoring agent is generally present in amounts from about 0.02% to about 5%, and more specifically from about 0.1% to about 2%, and even more specifically, from about 0.8% to about 1.8%, by weight of the chewing gum composition.

Coloring agents may be used in amounts effective to produce the desired color. The coloring agents may include pigments which may be incorporated in amounts up to about 6%, by weight of the gum composition. For example, titanium dioxide may be incorporated in amounts up to about 2%, and preferably less than about 1%, by weight of the gum composition. The colorants may also include natural food colors and dyes suitable for food, drug and cosmetic applications. These colorants are known as F.D.& C. dyes and lakes. The materials acceptable for the foregoing uses are preferably water-soluble. Illustrative nonlimiting examples include the indigoid dye known as F.D.& C. Blue No.2, which is the disodium salt of 5,5-indigotindisulfonic acid. Similarly, the dye known as F.D.& C. Green No.1 comprises a triphenylmethane dye and is the monosodium salt of 4-[4-(N-ethyl-p-sulfoniumbenzylamino) diphenylmethylene]-[1-(N-ethyl -N-p-sulfoniumbenzyl)-delta-2,5-cyclohexadieneimine]. A full recitation of all F.D. & C. colorants and their corresponding chemical structures may be found in the Kirk-Othmer Encyclopedia of Chemical Technology, 3rd Edition, in volume 5 at pages 857-884, which text is incorporated herein by reference.

Suitable oils and fats usable in gum compositions include partially hydrogenated vegetable or animal fats, such as coconut oil, palm kernel oil, beef tallow, and lard, among others, These ingredients when used are generally present in amounts up to about 7%, and preferably up to about 3.5%, by weight of the gum composition.

Some embodiments may include a method for preparing the improved chewing gum compositions for the gum region, including both chewing gum and bubble gum compositions. The chewing gum compositions may be prepared using standard techniques and equipment known to those skilled in the art The apparatus useful in accordance with some embodiments comprises any mixing and heating apparatus well-known in the chewing gum manufacturing arts, and therefore the selection of the specific apparatus will be apparent to the artisan.

Any of a variety of active ingredients may be included in any of the embodiments described herein. The active may be included in the extruded composition or alternatively in a gum composition. Examples of actives include sweetener, flavors, and breath-freshening agents (as described above), medicaments such as analgesics, anti-histamines, decongestants, and antacids, and vitamins,

A variety of drugs, including medications, herbs, and nutritional supplements may also be included as the active. Examples of useful drugs include ace-inhibitors, antianginal drugs, anti-arrhythmias, anti-asthmatics, anti-cholesterolemics, analgesics, anesthetics, anti-convulsants, anti-depressants, anti-diabetic agents, anti-diarrhea preparations, antidotes, anti-histamines, anti-hypertensive drugs, anti-inflammatory agents, anti-lipid agents, anti-manics, anti-nauseants, anti-stroke agents, anti-thyroid preparations, anti-tumor drugs, anti-viral agents, acne drugs, alkaloids, amino acid preparations, anti-tussives, anti-uricemic drugs, anti-viral drugs, anabolic preparations, systemic and non-systemic anti-infective agents, antineoplastics, anti-parkinsonian agents, anti-rheumatic agents, appetite stimulants, biological response modifiers, blood modifiers, bone metabolism regulators, cardiovascular agents, central nervous system stimulates, cholinesterase inhibitors, contraceptives, decongestants, dietary supplements, dopamine receptor agonists, endometriosis management agents, enzymes, erectile dysfunction therapies such as sildenafil citrate, which is currently marketed as Viagra®, fertility agents, gastrointestinal agents, homeopathic remedies, hormones, hypercalcemia and hypocalcemia management agents, immunomodulators, immunosuppressives, migraine preparations, motion sickness treatments, muscle relaxants, obesity management agents, osteoporosis preparations, oxytocics, parasympatholytics, parasympathomimetics, prostaglandins, psychotherapeutic agents, respiratory agents, sedatives, smoking cessation aids such as bromocryptine or nicotine, sympatholytics, tremor preparations, urinary tract agents, vasodilators, laxatives, antacids, ion exchange resins, antipyretics, appetite suppressants, expectorants, anti-anxiety agents, anti-ulcer agents, anti-inflammatory substances, coronary dilators, cerebral dilators, peripheral vasodilators, psycho-tropics, stimulants, anti-hypertensive drugs, vasoconstrictors, migraine treatment, antibiotics, tranquilizers, anti-psychotics, anti-tumor drugs, anti-coagulants, anti-thrombotic drugs, hypnotics, anti-emetics, anti-nauseants, anti-convulsants, neuromuscular drugs, hyper-and hypo-glycemic agents, thyroid and anti-thyroid preparations, diuretics, anti-spasmodics, terine relaxants, anti-obesity drugs, erythropoietic drugs, anti-asthmatics, cough suppressants, mucolytics, DNA and genetic modifying drugs, and combinations thereof

The features and advantages of the present invention are more fully shown by the following examples which are provided for purposes of illustration, and are not to be construed as limiting the invention in any way.

### EXAMPLE

General steps followed for preparing the co-crystallized / precipitated compositions included the following procedure. First, a quantity of β-cyclodextrin was added to sucralose and the resulting mixture was then dissolved in 25 ml. water and heated to 80 °C for one hour. The solution was then cooled to 20 °C and allowed to crystalline overnight under refrigeration. The crystalline precipitate was then filtered off by cold-filtration, air-dried, and then milled to a uniform particle size.

In particular, a series of samples of co-crystalline complexes were prepared for testing. Accordingly, 0.25 g, 0.5 g and 1,0 g of cyclodextrin were added to sucralose to prepare a total of 5 g of mixture in accordance with the general procedure above. The samples thus corresponded to mixtures containing 5%, 10% and 20% cyclodextrin. As a comparison, a sample containing pure sucralose was prepared in the same manner, and was likewise milled identically to eliminate any particle size differences.

The co-crystallized / precipitated particles prepared above were combined with polyvinyl acetate (PVAc) and were extruded at a temperature of about 195 °F (92 °C) to provide an extruded sucralose composition. The changes of color (discoloration) of the extruded sucralose compositions were measured by taking diffuse reflectance absorbance readings with a Minolta spectrophotometer of the respective samples. The results are set forth in Table 1.

Referring to Table 1, it is apparent that significant improvement in color is obtained with cyclodextrin stabilized sucralose/PVAc extrudate as compared to free sucralose/PVAc extrudate.

### Measurement of discoloration/degradation of extruded sucralose

The change of color of extruded sucralose compositions was measured by taking Diffuse Reflectance Absorbance readings with a Minolta spectrophotometer model no. CR-321. Absorbance measurements over the entire visible color spectrum were obtained using the International Commission on Illumination (CIE) CIE L*a*b* ΔE color difference formula (CIELab color scale). This scale quantifies color according to 3 parameters, L* (lightness-darkness scale), a* (red-green chroma), and b* (yellow-blue chroma). The overall change in the color of the encapsulated sucralose composition was calculated using the CIELAB equation ΔE = [(ΔL*)² + (Δa*)² + (Δb*)²]^{1/2}. The ΔE value summarizes the overall change for each color factor (ΔL*= (L_{f}*-Lᵢ*), Δa* = )(a_{f}*-aᵢ*), and Δb* = (b_{f}*-bᵢ*)) and represents the ability of the cyclodextrin to prevent browning which is related to decomposition of sucralose. In order to obtain reproducible readings, measurements were conducted by aligning the center of the 4 mm square segment of encapsulated sucralose composition directly over the 3 mm diameter targeting aperture of the Minolta spectrophotometer. An average of 3 absorbance readings using the L*, a*, and b* scale were taken for each sucralose composition. There was a significant difference between cyclodextrin-sucralose versus free sucralose extrudate, 83.74 being whiter than 76.43. For Delta b*, which is a measure of brown color, there was also significant difference between cyclodextrin-sucralose and free sucralose 6.89 being more brown as compared to 2.26.

**Table 1: The change of color of extruded sucralose compositions**

| | **Lᵢ*** | **aᵢ*** | **bᵢ*** | **L_{f}*** | **a_{f}*** | **b_{f}*** | **ΔE** |
|---|---|---|---|---|---|---|---|
| **Free sucralose-PVAc composition** | **94.74** | **-0.74** | **0.22** | **76.43** | **0.29** | **6.89** | **19.50** |
| **β-Cyclodextrin stabilized Sucralose-PVAc composition** | **94.74** | **-0.74** | **0.22** | **83.71** | **0.29** | **2.26** | **10.50** |

## Claims

1. A method of preparing a co-crystallized / precipitated complex comprising:
(a) preparing a solution of sucralose and cyclodextrin in water,
(b) maintaining said solution under heat for a period of time sufficient to allow formation of a sucralose/cyclodextrin complex;
(c) drying said solution to permit harvesting of said co-crystallized / precipitated sucralose/cyclodextin complex; and
(d) forming said co-crystallized / precipitated complex to a suitable particle size.

2. The method of claim 1, wherein said solution is heated to a temperature in the range from 40 °C to 80°C.

3. The method of claim 1, wherein said maintaining of said solution under heat is conducted for 10 minutes to 20 minutes.

4. A method of preparing an encapsulated sweetener comprising:
(a) preparing a solution of sucralose and cyclodextrin in water_{;}
(b) maintaining said solution under heat for a time sufficient to allow co-crystallization of said sucralose and said cyclodextrin to form a co-crystallized / precipitated complex;
(c) drying said co-crystallized precipitated complex;
(d) forming said co-crystallized / precipitated complex into a suitable particle size;
(e) combining said co-crystallized / precipitated complex with an encapsulating polymer_{;}
(f) melt extruding said co-crystallized / precipitated complex with said polymer to provide an encapsulated sweetener composition; and
(g) forming said encapsulated sweetener composition into a suitable particle size.

5. The method of claim 4, wherein said solution is heated to a temperature in the range from 40 °C to 80 °C.

6. The method of claim 4, wherein said maintaining of said solution under heat is conducted for 10 minutes to 20 minutes.

7. A method of preparing a gum composition comprising the step of combining a gum base and a sweetener composition;
said sweetener composition provided by
(i) preparing a solution of art amount of sucralose and an amount of cyclodextrin in water;
(ii) heating said solution;
(iii) maintaining said solution for a period of time sufficient to allow co-crystallization of said sucralose and said cyclodextrin to form a co-crystallized / precipitated complex;
(iv) drying said co-crystallized / precipitated complex;
(v) grinding said co-crystallized / precipitated complex to a suitable particle size;
(vi) combining said co-crystallized / precipitated complex with polyvinyl acetate;
(vii) melting and extruding said co-crystallized / precipitated complex with polyvinyl acetate providing an encapsulated composition;
(viii) cooling said encapsulated composition; and
(ix) grinding said encapsulated composition to a suitable particle size.

8. The method of claim 7- wherein said polyvinyl acetate has been co-extruded with said co-crystallized / precipitated complex.

9. The method of claim 7, wherein said co-crystallized / precipitated complex comprises cyclodextrin in an amount of at least about 5% by weight of said co-crystallized / precipitated complex.

10. The method of claim 7, wherein said polyvinyl acetate has a molecular weight from 15,000 to 500,000.

11. The method of claim 7, wherein said encapsulated composition further comprises at least one intense sweetener other than sucralose.

12. The method of claim 7, wherein said solution is heated to a temperature in the range from 40 °C to 80 °C.

13. The method of claim 7, wherein said maintaining of said solution of step (c) is for 10 minutes to 20 minutes.

14. A composition comprising an aqueous solution comprising sucralose and cyclodextrin in the temperature range from 40 °C to 80 °C.

## Patentansprüche

1. Verfahren zur Herstellung eines ko-kristallisierten / ausgefällten Komplexes, umfassend:
(a) Zubereiten einer Lösung von Sucralose und Cyclodextrin in Wasser,
(b) Stehenlassen der Lösung in der Wärme für eine ausreichende Dauer, damit ein Sucralose/Cyclodextrin-Komplex gebildet werden kann,
(c) Trocknen der Lösung, damit der ko-kristallisierte / ausgefällte Sucralose/Cyclodextrin-Komplex gewonnen werden kann, und
(d) Formen des ko-kristallisierten / ausgefällten Komplexes zu einer geeigneten Teilchengröße.

2. Verfahren nach Anspruch 1, wobei die Lösung auf eine Temperatur im Bereich von 40 °C bis 80 °C erwärmt wird.

3. Verfahren nach Anspruch 1, wobei das Stehenlassen der Lösung in der Wärme für eine Dauer von 10 Minuten bis 20 Minuten erfolgt.

4. Verfahren zur Herstellung eines eingekapselten Süßstoffs, umfassend:
(a) Zubereiten einer Lösung von Sucralose und Cyclodextrin in Wasser,
(b) Stehenlassen der Lösung in der Wärme für eine ausreichende Dauer für die Ko-kristallisation der Sucralose und des Cyclodextrins, um einen ko-kristallisierten / ausgefällten Komplex zu bilden,
(c) Trocknen des ko-kristallisierten / ausgefällten Komplexes,
(d) Formen des ko-kristallisierten / ausgefällten Komplexes zu einer geeigneten Teilchengröße,
(e) Zusammenführen des ko-kristallisierten / ausgefällten Komplexes mit einem einkapselnden Polymer,
(f) Schmelzextrudieren des ko-kristallisierten / ausgefällten Komplexes mit dem Polymer, um eine eingekapselte Süßstoffzusammensetzung bereitzustellen, und
(g) Formen der eingekapselten Süßstoffzusammensetzung zu einer geeigneten Teilchengröße.

5. Verfahren nach Anspruch 4, wobei die Lösung auf eine Temperatur im Bereich von 40 °C bis 80 °C erwärmt wird.

6. Verfahren nach Anspruch 4, wobei das Stehenlassen der Lösung in der Wärme für eine Dauer von 10 Minuten bis 20 Minuten erfolgt.

7. Verfahren zur Zubereitung einer Gummizusammensetzung, umfassend den Schritt des Zusammenführens einer Gummibasis und einer Süßungsmittelzusammensetzung,
wobei die Süßungsmittelzusammensetzung bereitgestellt wird durch
(i) Zubereiten einer Lösung von einer Menge Sucralose und einer Menge Cyclodextrin in Wasser,
(ii) Erwärmen der Lösung
(iii) Stehenlassen der Lösung für eine ausreichende Dauer für die Ko-kristallisation der Sucralose und des Cyclodextrins, um einen ko-kristallisierten / ausgefällten Komplex zu bilden,
(iv) Trocknen des ko-kristallisierten / ausgefällten Komplexes,
(v) Vermahlen des ko-kristallisierten / ausgefällten Komplexes zu einer geeigneten Teilchengröße,
(vi) Zusammenführen des ko-kristallisierten / ausgefällten Komplexes mit Polyvinylacetat,
(vii) Schmelzen und Extrudieren des ko-kristallisierten / ausgefällten Komplexes mit Polyvinylacetat unter Bereitstellung einer eingekapselten Zusammensetzung,
(viii) Abkühlen der eingekapselten Zusammensetzung, und
(ix) Vermahlen der eingekapselten Zusammensetzung zu einer geeigneten Teilchengröße.

8. Verfahren nach Anspruch 7, wobei das Polyvinylacetat mit dem ko-kristallisierten / ausgefällten Komplex ko-extrudiert wurde.

9. Verfahren nach Anspruch 7, wobei der ko-kristallisierte / ausgefällte Komplex Cyclodextrin in einer Menge von mindestens ungefähr 5 Gewichtsprozent des ko-kristallisierten / ausgefällten Komplexes umfasst.

10. Verfahren nach Anspruch 7, wobei das Polyvinylacetat ein Molekulargewicht von 15.000 bis 500.000 besitzt.

11. Verfahren nach Anspruch 7, wobei die eingekapselte Zusammensetzung darüber hinaus mindestens einen Intensivsüßstoff umfasst, bei dem es sich nicht um Sucralose handelt.

12. Verfahren nach Anspruch 7, wobei die Lösung auf eine Temperatur im Bereich von 40 °C bis 80 °C erwärmt wird.

13. Verfahren nach Anspruch 7, wobei das Stehenlassen der Lösung aus Schritt (c) für eine Dauer von 10 Minuten bis 20 Minuten erfolgt.

14. Zusammensetzung umfassend eine wässrige Lösung, die Sucralose und Cyclodextrin im Temperaturbereich von 40 °C bis 80 °C umfasst.

## Revendications

1. Procédé de préparation d'un complexe co-cristallisé/précipité comprenant :
(a) la préparation d'une solution de sucralose et de cyclodextrine dans de l'eau ;
(b) le maintien de ladite solution sous la chaleur pendant une période de temps suffisante pour permettre la formation d'un complexe de sucralose/cyclodextrine ;
(c) le séchage de ladite solution pour permettre la collecte dudit complexe de sucralose/cyclodextrine co-cristallisé/précipité ; et
(d) la formation dudit complexe co-cristallisé/précipité à une granulométrie appropriée.

2. Procédé selon la revendication 1, dans lequel ladite solution est chauffée à une température comprise entre 40°C et 80°C.

3. Procédé selon la revendication 1, dans laquelle le maintien de ladite solution sous la chaleur est effectué pendant 10 à 20 minutes.

4. Procédé de préparation d'un édulcorant encapsulé comprenant :
(a) la préparation d'une solution de sucralose et de cyclodextrine dans de l'eau ;
(b) le maintien de ladite solution sous la chaleur pendant une période de temps suffisante pour permettre la co-cristallisation dudit sucralose et de ladite cyclodextrine pour former un complexe co-cristallisé/précipité ;
(c) le séchage dudit complexe co-cristallisé/précipité ;
(d) la formation dudit complexe co-cristallisé/précipité à une granulométrie appropriée ;
(e) la combinaison dudit complexe co-cristallisé/précipité avec un polymère d'encapsulation ;
(f) l'extrusion à l'état fondu dudit complexe co-cristallisé/précipité avec ledit polymère pour former une composition d'édulcorant encapsulé ; et
(g) la formation de ladite composition d'édulcorant encapsulé à une granulométrie appropriée.

5. Procédé selon la revendication 4, dans lequel ladite solution est chauffée à une température comprise entre 40°C et 80°C.

6. Procédé selon la revendication 4, dans lequel le maintien de ladite solution sous la chaleur est effectué pendant 10 à 20 minutes.

7. Procédé de préparation d'une composition de gomme comprenant l'étape consistant à combiner une base de gomme et une composition d'édulcorant ; ladite composition d'édulcorant étant obtenue par
(i) préparation d'une solution d'une certaine quantité de sucralose et d'une certaine quantité de cyclodextrine dans de l'eau ;
(ii) chauffage de ladite solution ;
(iii) maintien de ladite solution pendant une période de temps suffisante pour permettre la co-cristallisation dudit sucralose et de ladite cyclodextrine afin de former un complexe co-cristallisé/précipité ;
(iv) séchage dudit complexe co-cristallisé/précipité ;
(v) broyage dudit complexe co-cristallisé/précipité à une granulométrie appropriée ;
(vi) combinaison dudit complexe co-cristallisé/précipité avec du polyacétate de vinyle ;
(vii) fusion et extrusion dudit complexe co-cristallisé/précipité avec le polyacétate de vinyle pour obtenir une composition encapsulée ;
(viii) refroidissement de ladite composition encapsulée ; et
(ix) broyage de ladite composition encapsulée à une granulométrie appropriée.

8. Procédé selon la revendication 7, dans lequel ledit polyacétate de vinyle a été co-extrudé avec ledit complexe co-cristallisé/précipité.

9. Procédé selon la revendication 7, dans lequel ledit complexe co-cristallisé/précipité comprend de la cyclodextrine en une quantité d'au moins environ 5 % en poids dudit complexe co-cristallisé/précipité.

10. Procédé selon la revendication 7, dans lequel ledit polyacétate de vinyle a une masse moléculaire de 15 000 à 500 000.

11. Procédé selon la revendication 7, dans lequel ladite composition encapsulée comprend en outre au moins un édulcorant intense autre que le sucralose.

12. Procédé selon la revendication 7, dans lequel ladite solution est chauffée à une température comprise entre 40°C et 80°C.

13. Procédé selon la revendication 7, dans lequel ledit maintien de ladite solution de l'étape (c) dure 10 à 20 minutes.

14. Composition comprenant une solution aqueuse contenant du sucralose et de la cyclodextrine à une température comprise entre 40°C et 80°C.
